Europäisches Patentamt

European Patent Office

Office européen des brevets

(11) Veröffentlichungsnummer: **0 164 769**
A1

(12) **EUROPÄISCHE PATENTANMELDUNG**

(21) Anmeldenummer: 85200633.7

(22) Anmeldetag: 24.04.85

(51) Int. Cl.⁴: **G 11 B 15/28**

(30) Priorität: 12.05.84 DE 3417730

(43) Veröffentlichungstag der Anmeldung:
18.12.85 Patentblatt 85/51

(84) Benannte Vertragsstaaten:
DE FR GB

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Ruyten, Henricus**
**Volpertshäuser Strasse 14**
**D-6330 Wetzlar(DE)**

(74) Vertreter: **Kupfermann, Fritz-Joachim et al,**
**Philips Patentverwaltung GmbH Billstrasse 80 Postfach**
**10 51 49**
**D-2000 Hamburg 28(DE)**

(54) **Magnetbandkassettengerät mit wenigstens einer Tonwelle.**

(57) Die Erfindung bezieht sich auf ein Magnetbandkassettengerät mit wenigstens einer das Magnetband (12) zusammen mit einer Andruckrolle (4a, 4b) transportierenden Tonwelle (6a, 6b). Die Tonwelle ist in einer Lagerung (19) abgestützt, die mit einem Fuß (18) an einer Tragplatte (15) des Gerätes angeordnet ist. An den Fuß (18), durch den in einer Bohrung die Tonwelle geführt ist, schließt sich ein Mantel (17) an, der oberhalb der Tragplatte (15) wenigstens an der von der Andruckrolle (4a, 4b) abgekehrten Seite die Tonwelle (6a, 6b) zum Abstreifen des Magnetbandes umschließt. Der Fuß (18) und der Mantel (17) sind als eine einstückige Einheit aus einem einheitlichen Material gebildet. Die Lagerung (19) ist in der Innenwand (18a) der Fußbohrung als Spiralrillenlager ausgebildet.

Fig.4

Magnetbandkassettengerät mit wenigstens einer Tonwelle

Die Erfindung bezieht sich auf ein Magnetbandkassettengerät mit wenigstens einer das Magnetband zuammen mit einer Andruckrolle transportierenden Tonwelle, die in einer Lagerung abgesstützt ist, die mit einem Fuß an einer Tragplatte des Gerätes angeordnet ist, wobei an den Fuß, durch den in einer Bohrung die Tonwelle geführt ist, ein Mantel anschließt, der oberhalb der Tragplatte wenigstens an der von der Andruckrolle abgekehrten Seite die Tonwelle zum Abstreifen des Magnetbandes umschließt.

Ein derartiges Magnetbandkassettengerät ist aus der US-PS 39 67 769 bekannt. Die Tonwelle greift durch die Tragplatte hindurch bis in einen Bereich, in den die Magnetbandkassette eingesetzt wird. Bei eingesetzter Magnetbandkassette greift die Tonwelle dann durch die Magnetbandkassette hindurch. Teilkreisförmig umschließt ein Mantel die Tonwelle. Der Mantel umschließt die Tonwelle auf der von der Andruckrolle des Gerätes abgelegenen Seite und verhindert damit, daß sich das Band um die Tonwelle wickeln kann. Dieses evtl. Herumwickeln ist außerordentlich störend, da die Kassette dann nicht mehr aus dem Gerät herausgenommen werden kann und im ungünstigsten Fall das Gerät selbst sogar geöffnet werden muß. Handelt es sich dabei um das Laufwerk in einem Autoradiogerät, dann müßte dieses Gerät bei einem solchen Fehler zusätzlich noch aus dem Auto ausgebaut werden.

0164769

Bei der bekannten Konstruktion ist unterhalb des Mantels als spezielles Einzelteil eine Tonwellenlagerung vorgesehen. Der Mantel zusammen mit der Tonwellenlagerung und einem Mantelfuß werden in die Tragplatte eingesetzt. Diese Konstruktion ist relativ aufwendig hinsichtlich der Kosten und der Montage. Außerdem muß der Lochdurchmesser zum Einsetzen des Fußes in die Tragplatte wegen des in den Fuß aufgenommenen Lagers relativ groß sein.

Es ist Aufgabe der Erfindung, ein Magnetbandkassettengerät der eingangs erwähnten Art zu schaffen, bei dem ein besonders gefertigtes und besonders eingesetztes Lager überflüssig ist.

Die gestellte Aufgabe ist erfindungsgemäß dadurch gelöst, daß der Fuß und der Mantel als eine einstückige Einheit aus einem einheitlichen Material gebildet sind, wobei die Lagerung in der Innenwand der Fußbohrung als Spiralrillenlager ausgebildet ist.

Auf diese Weise erübrigt sich ein zusätzliches Lager, und der Fuß der Einheit kann schlanker sein. Der Mantel zusammen mit der Lagerung kann in einem Arbeitsgang hergestellt und angebracht werden. Der Vorteil des Aufbaues dieser Einheit besteht darin, daß mit einem einfachen Kunststoff gearbeitet werden kann, der nicht unmittelbar als Lagerwerkstoff ausgebildet ist. Das einmal in das Lager eingebrachte Schmierfett verbleibt für die Lebensdauer des Gerätes in den Spiralrillen des Lagers. Eine einwandfreie Schmierung und ein guter Lauf der Tonwelle sind damit bei einfachstem Aufbau gesichert.

Es ist an sich aus der AT-PS 374 609 bekannt, einen Fuß und eine Verbindung zu einem oberen Lagerteil der Tonwelle aus einem einstückigen Material zu bilden. Wie die Tonwelle in dem Fuß gelagert ist, ist dabei aber nicht ausgesagt. Ebenso ist die Verbindung nicht als Abstreifer für
das Magnetband ausgebildet.

Nach einer weiteren Ausgestaltung der Erfindung ist vorgesehen, daß sich die Lagerung in axialer Richtung oberhalb
der Tragplate bei aufgesetzter Magnetbandkassette bis in
das Gehäuse der Kassette unterhalb des unteren Bandrandes
erstreckt. Durch die Abstützung der Tonwelle bis nahe
unterhalb des Tonbandes ist sichergestellt, daß die Tonwelle immer gut geführt ist und sich nicht durchbiegen
kann unter dem Einfluß der andrückenden Andruckrolle. Dies
ist wieder der Vorteil der einstückigen Ausbildung des
Lagers in Verbindung mit dem Mantel.

Nach einer weiteren Ausgestaltung der Erfindung ist vorgesehen, daß die Lagerung und der Mantel in Outsert-
Moulding-Technik an die Tragplate angespritzt sind. Die
Einheit aus Mantel und Lagerung läßt sich damit gleichzeitig mit dem Anspritzen von weiteren Lagerstellen und
Lagerstiften an der Tragplatte selbst im Augenblick des
Spritzvorganges bilden. Damit ist die Einheit wirtschaftlich und mit großer Präzision herstellbar.

Nach einer weiteren Ausgestaltung der Erfindung ist vorgesehen, daß der Mantel zur Andruckrolle hin zwei Bewegungsränder aufweist, die parallel zu einer Fläche liegen, die
tangential zur Andruckrollenachse verläuft. Der Mantel
kann sich damit über einen größtmöglichen Teil des Tonwellenumfanges erstrecken. Das gibt die größte Sicherheit
gegen ein Umwickeln des Bandes um die Tonwelle.

Nach einer weiteren Ausgestaltung der Erfindung ist vorgesehen, daß die Einheit aus Fuß, Lagerung und Mantel an ihrer Außenseite von der Tragplatte an konisch zuläuft. Eine derartig konische Ausbildung erleichtert das Spritzen der Einheit. Gleichzeitig erleichtert es das Aufschieben der Kassette auf die Einheit.

Die Erfindung wird anhand des in der Zeichnung dargestellten Ausführungsbeispieles näher erläutert. Es zeigen:

Fig. 1 einen Teil eines Magnetbandkassettengerätes in Draufsicht zusammen mit einer Magnetbandkassette,

Fig. 2 einen Schnitt durch Gerät und Kassette längs der Linie II-II nach Fig. 1 mit gleichzeitig geschnitten dargestellter Einheit aus Tonwellenlagerung und Mantel,

Fig. 3 eine Draufsicht auf die Tonwelle und die Einheit aus Mantel und Lagerung zusammen mit der Andruckrolle und einem durchgezogenen Magnetbandstück,

Fig. 4 einen Schnitt durch die Einheit aus Tonwellenlagerung und Mantel längs der Linie IV-IV nach Fig. 3.

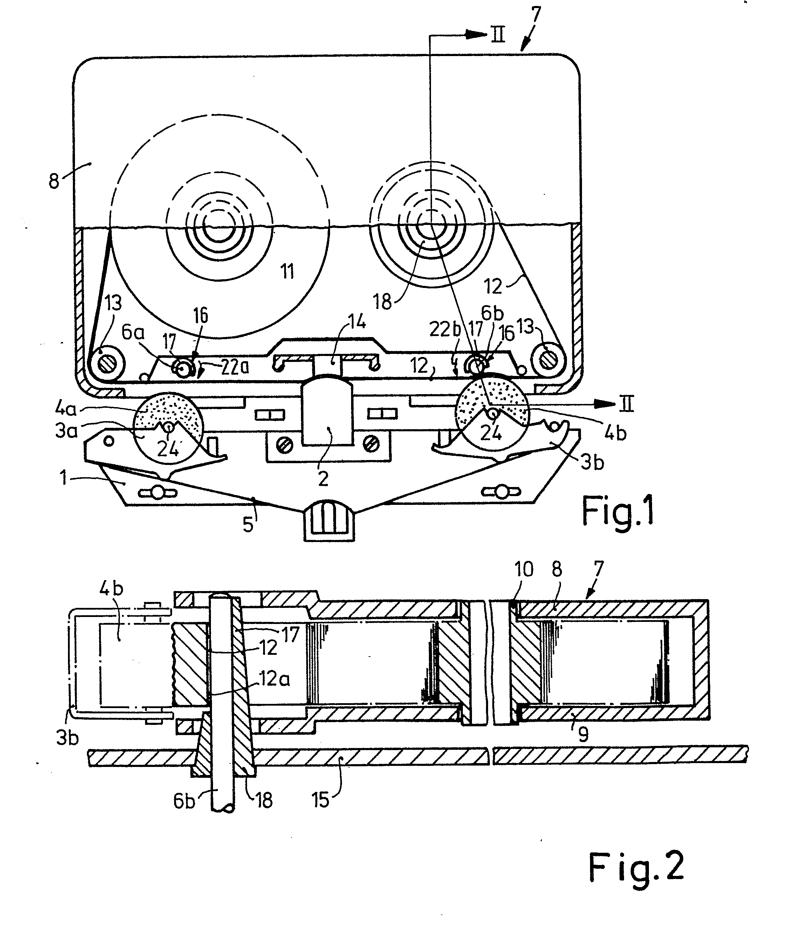

Das Magnetbandkassettengerät, das in Fig. 1 angedeutet ist, weist eine Kopfträgerplatte 1 auf, an der ein Tonkopf 2 befestigt ist. Weiterhin trägt die Kopfplatte 1 über Druckrollenhalter 3a und 3b Andruckrollen 4a und 4b. An der Kopfträgerplatte 1 ist eine Feder 5 vorgesehen, mit deren Hilfe die Halter 3a, 3b die Andruckrollen 4a, 4b gegen Tonwellen 6a, 6b drücken können. Die Kopfträgerplatte ist auf nicht dargestellte Weise kippbar, so daß entweder die Andruckrolle 4b oder die Andruckrolle 4a gegen die zugehörige Tonwelle 6b bzw. 6a drückbar ist. In Fig. 1 drückt die Andruckrolle 4b gegen die Tonwelle 6b.
Dies ist beispielsweise die Laufrichtung für Vorwärtslauf,
während beim Andrücken der Andruckrolle 4a an die Tonwelle
6a das Gerät auf Reverse-Betrieb geschaltet ist.

Auf das Gerät ist in der Darstellung nach Fig. 1 eine
Magnetbandkassette 7 aufgesetzt, die in Fig. 2 geschnitten
dargestellt ist. Die Kassette besteht aus einer oberen
Wand 8 und einer unteren Wand 9, zwischen denen zwei
Wickelkerne 10, 11 angeordnet sind. Auf die Wickelkerne
ist ein Magnetband 12 gewickelt. Das Band ist zwischen den
Wickelkernen 10, 11 über Umlenkrollen 13 geführt. Zwischen
den Umlenkrollen läuft es zwischen den Andruckrollen 4 und
Tonwellen 6 hindurch. Ein Filz 14 drückt das Band 12 gegen
den Tonkopf 2. Die Kassette ist vom sogenannten standardisierten Kompakt-Kassettentyp. Selbstverständlich kann auch
eine andere Magnetbandkassette zum Einsatz kommen.

Das Gerät weist eine Tragplatte 15 auf, auf der alle
wesentlichen Teile der Oberseite des Gerätes montiert
sind. Das Montieren erfolgt vorzugsweise durch Anspritzen
von Halterungen, Stiften, Lagern und dergl. in sogenannter
Outsert-Moulding-Technik. Der Vorteil dieser Technik
besteht darin, daß man mit großer Genauigkeit wirtschaftliche Baueinheiten erstellen kann. Bei den späteren
Montagevorgängen werden die Montagehandlungen auf ein
Minimum reduziert.

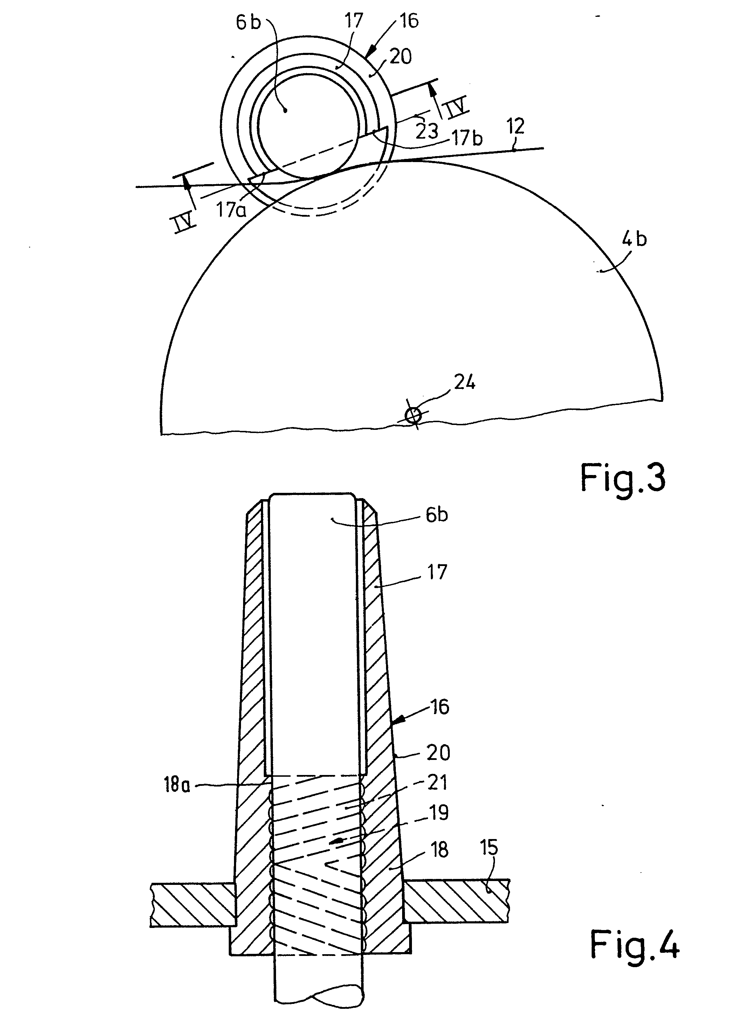

In der sogenannten Outsert-Moulding-Technik sind an die
Tragplatte 15 linke und rechte Einheiten 16 angespritzt,
die jede aus einem Mantel 17 und einem Fuß 18 bestehen, in
dem eine Bohrung vorgesehen ist, durch die die Tonwelle
6a, 6b geführt ist. Die Innenwand 18a der Bohrung ist als Lager 19 für die Tonwelle 6a, 6b ausgebildet. Am deutlichsten ist diese Ausbildung aus Fig. 4 zu ersehen. Die Außenwand 20 der Einheit ist von der Tragplatte 15 an konisch zulaufend ausgebildet. Das Lager 19 ist als Spiralrillenlager ausgebildet. Die Rillen 21 des Lagers 19 sind mit Schmierfett gefüllt. Die Tonwellen 6a bzw. 6b laufen in Richtung der Pfeile 22a, 22b um. Damit das Fett in den Rillen 21 verbleibt, verlaufen die Rillen an der Ober- und Unterseite des Lagers keilförmig aufeinander zu in Drehrichtung. Damit laufen die Rillen 21 des linken Lagers 19 entgegengesetzt zu den Rillen im rechten Lager.

Jedes der Lager 19 erstreckt sich in axialer Richtung oberhalb der Tragplatte bei aufgesetzter Magnetbandkassette 7 bis in das Gehäuse der Kassette unterhalb des unteren Bandrandes des Bandes 12. Dies ergibt sich deutlich aus Fig. 2. In dieser Fig. 2 ist der untere Bandrand mit 12a bezeichnet. Einstückig mit dem Fuß 18 ist der Mantel 17 gebildet, der sich, wie deutlich aus Fig. 2 und 4 zu entnehmen ist, über den Fuß 18 bzw. das Lager 19 nach oben hinaus erstreckt nahezu bis zum oberen Ende der Tonwelle 6a bzw. 6b. Der Mantel 17 umgibt die Tonwellen 6a bzw. 6b in einem geringen Abstand. Der Mantel umgibt die Tonwellen 6a bzw. 6b nur teilweise, und zwar auf der von der Andruckrolle abgelegenen Seite. Der Umschlingungswinkel bzw. der abgedeckte Bereich erstreckt sich dabei über einen Winkel von etwa 220° bis 235°. Der Mantel 17 weist zur Andruckrolle 4a bzw. 4b hin zwei Begrenzungsränder 17a, 17b auf, die parallel zu einer Fläche 23 liegen, die tangential zur Andruckrollenachse 24 verläuft.

Wenn während des Betriebes das Magnetband zwischen Tonwelle und Andruckrolle gefördert wird, kann es eintreten,

0164769

daß das Magnetband infolge von Tonwellenverschmutzungen ein wenig an der Tonwelle anklebt. Dies kann zur Folge haben, daß das Magnetband sich auf der Ablaufseite nicht völlig von der Tonwelle abhebt, sondern mitgezogen wird. Ohne den Mantel kann dies ein Umwickeln des Tonbandes um die Tonwelle zur Folge haben. Bei Verwendung des Mantels 17 wird das Tonband von der Tonwelle abgehoben und kann sich nicht um die Tonwelle wickeln. Die Ausbildung des Fußes 18, des Lagers 19 und des Mantels 17 aus einem einheitlichen Kunststoffmaterial bietet die Möglichkeit, die Einheit wirtschaftlich anzubringen, beispielsweise indem sie gleichzeitig mit dem Spritzen von anderen Halterungen auf der Tragplatte 15 gebildet wird. Es wird für das Spiralrillenlager kein besonderer Kunststoff benötigt. Der Fuß 18, das Lager 19 und der Mantel 17 werden aus dem gleichen Material gespritzt wie die übrigen Halterungen der Tragplatte 15. Der Fuß 18 und damit in ihm das Lager 19 haben eine solche Höhe, daß die Tonwelle bis knapp unterhalb des Magnetbandes sicher geführt ist und von der Andruckrolle 4a bzw. 4b nicht seitlich weggedrückt werden kann. Damit werden Verbiegungen der Tonwelle und daraus resultierende Schlingerbewegungen verhütet. Durch das Wegfallen eines konkreten, aus anderem Material bestehenden Lagers kann der Fuß so schlank gehalten werden, daß er durch die Öffnung einer normalen Kompakt-Kassette hindurchgreifen kann bis knapp unterhalb des Magnetbandes 12. Dennoch kann der Fuß frei liegen innerhalb der Norm-Öffnung der Kassette.

0164769

PHD 84-073 EP

PATENTANSPRÜCHE

1. Magnetbandkassettengerät mit wenigstens einer das Magnetband zusammen mit einer Andruckrolle transportierenden Tonwelle, die in einer Lagerung abgestützt ist, die mit einem Fuß an einer Tragplate des Gerätes angeordnet ist, wobei an den Fuß, durch den in einer Bohrung die Tonwelle geführt ist, ein Mantel anschließt, der oberhalb der Tragplatte wenigstens an der von der Andruckrolle abgekehrten Seite die Tonwelle zum Abstreifen des Magnetbandes umschließt, dadurch gekennzeichnet, daß der Fuß (18) und der Mantel (17) als eine einstückige Einheit aus einem einheitlichen Material gebildet sind, wobei die Lagerung (19) in der Innenwand (18a) der Fußbohrung als Spiralrillenlager ausgebildet ist.

2. Magnetbandkassettengerät nach Anspruch 1, dadurch gekennzeichnet, daß sich die Lagerung (19) in axialer Richtung oberhalb der Tragplatte (15) bei aufgesetzter Magnetbandkassette (7) bis in das Gehäuse der Kassette (7) unterhalb des unteren Bandrandes (12a) erstreckt.

3. Magnetbandkassettengerät nach den Ansprüchen 1 oder 2, dadurch gekennzeichnet, daß die Lagerung (19) und der Mantel (17) in Outsert-Moulding-Technik an die Tragplate (15) angespritzt sind.

0164769

4. Magnetbandkassettengerät nach einem oder mehreren der Ansprüche 1 bis 3, dadurch gekennzeichnet, daß der Mantel (17) zur Andruckrolle (4a, 4b) hin zwei Begrenzungsränder (17a, 17b) aufweist, die parallel zu einer Fläche (23) liegen, die tangential zur Andruckrollenachse (24) verläuft.

5. Magnetbandkassettengerät nach einem oder mehreren der Ansprüche 1 bis 4, dadurch gekennzeichnet, daß die Einheit aus Fuß (18), Lagerung (19) und Mantel (17) an ihrer Außenseite (20) von der Tragplatte (15) an konisch verläuft.

6. Magnetbandkassettengerät nach den Ansprüchen 1 bis 5, dadurch gekennzeichnet, daß der umschließende Bereich sich über einen Winkel von 220° bis 235° erstreckt.

# ABGEÄNDERTE ANSPRÜCHE

85 200 633.7-                                    PHD 84-073 EP


Neue Patentansprüche:


1. Magnetbandkassettengerät mit wenigstens einer das Magnetband zusammen mit einer Andruckrolle transportierenden Tonwelle, die in einer Lagerung abgestützt ist, die mit einem Fuß an einer Tragplatte des Gerätes angeordnet ist, wobei an den Fuß, durch den in einer Bohrung die Tonwelle geführt ist, ein Mantel anschließt, der oberhalb der Tragplatte wenigstens an der von der Andruckrolle abgekehrten Seite die Tonwelle zum Abstreifen des Magnetbandes umschließt, wobei der Fuß und der Mantel als eine einstückige Einheit aus einem einheitlichen Material gebildet sind, dadurch gekennzeichnet, daß die Lagerung (19) in der Innenwand (18a) der Fußbohrung als Spiralrillenlager ausgebildet ist und daß sich die Lagerung (19) in axialer Richtung nach oben oberhalb der Tragplatte (15) bei aufgesetzter Magnetbandkassette (7) bis in das Gehäuse der Kassette (7) unterhalb des unteren Bandrandes (12a) erstreckt und nach unten bis zur Unterseite des Fußes erstreckt.


2. Magnetbandkassettengerät nach Anspruch 1, dadurch gekennzeichnet, daß die Lagerung (19) und der Mantel (17) in Outsert-Moulding-Technik an die Tragplatte (15) angespritzt sind.

# ABGEÄNDERTE ANSPRÜCHE

0164769

- 2 -     PHD 84-073 EP

3. Magnetbandkassettengerät nach den Ansprüchen 1 und 2, dadurch gekenzeichnet, daß die Einheit aus Fuß (18), Lagerung (19) und Mantel (17) an ihrer Außenseite (20) von der Tragplatte (15) an konisch zuläuft.

4. Magnetbandkassettengerät nach den Ansprüchen 1 bis 4, dadurch gekenzeichnet, daß der umschließende Bereich sich über einen Winkel von 220° bis 235° erstreckt.

Fig.3

Fig.4

| | **EINSCHLÄGIGE DOKUMENTE** | | EP 85200633.7 |
|---|---|---|---|
| **Kategorie** | Kennzeichnung des Dokuments mit Angabe, soweit erforderlich, der maßgeblichen Teile | **Betrifft Anspruch** | **KLASSIFIKATION DER ANMELDUNG (Int. Cl.4)** |
| X | AT - B - 374 609 (SONY)<br>   \* Fig. 1-7; Seite 2, Zeilen<br>    11-19 \*<br>     -- | 1,2,4 | G 11 B 15/28 |
| D,A | US - A - 3 967 769 (MATSUMOTO)<br>   \* Fig. 1-12; Zusammenfassung \*<br>     -- | 1 | |
| A | US - A - 3 790 055 (SIMS)<br>   \* Fig. 1-6; Zusammenfassung \*<br>     -- | 1,6 | |
| X | DE - A - 1 934 733 (SÜDDEUTSCHE MECHANISCHE WERKSTATTEN)<br>   \* Fig. 3 \*<br>     -- | 1,2 | |
| A | US - A - 3 462 057 (KOZO)<br>   \* Fig. 1-7 \*<br>     ---- | 1,6 | **RECHERCHIERTE SACHGEBIETE (Int. Cl.4)**<br><br>G 11 B 15/00<br>G 11 B 17/00<br>B 65 H 17/00<br>B 65 H 27/00 |

Der vorliegende Recherchenbericht wurde für alle Patentansprüche erstellt.

| Recherchenort | Abschlußdatum der Recherche | Prüfer |
|---|---|---|
| WIEN | 16-07-1985 | BERGER |